# EUROPEAN PATENT APPLICATION

(11) **EP 1 098 256 A2**
(43) Date of publication of application: **09.05.2001**
(21) Application number: 00309652.6
(22) Date of filing: 01.11.2000
(51) Int. Cl.: G06F 17/30

(54) **Information presenting apparatus, computer-readable storage medium, and information presenting method**

(30) Priority: 05.11.1999 JP 31485699
(71) Applicant: FUJITSU LIMITED, Kawasaki-shi, Kanagawa 211-8588 (JP)
(72) Inventor: Nagae, Takaaki, Kawasaki-shi, Kanagawa 214-0014 (JP)
(74) Representative: Hitching, Peter Matthew

(57) **Abstract**

Information presenting apparatus is provided which includes a storage device (1) storing layout information presenting an information acquisition method and a presentation form, an information acquisition circuit (2) acquiring desired information from an information source specified according to the layout information or information sources found by given searches according to the layout information, an editing circuit (3) laying out the acquired information according to the layout information, and a presenting device (4) visually presenting the laid out information. The information acquisition circuit (2) extracts key information from the acquired information and acquires another information using the key information.

Such information presenting apparatus is designed to display information which is acquired through the internet and laid out in a form providing for ease of visual perception of a user.

## Description

The present invention relates generally to an information presenting apparatus, a computer-readable storage medium, and an information presenting method.

In recent years, the internet is in widespread use. All sorts of persons access web sites called a home page and download desired information therefrom.

When various types of information are needed, it is usually necessary to download them from different web sites.

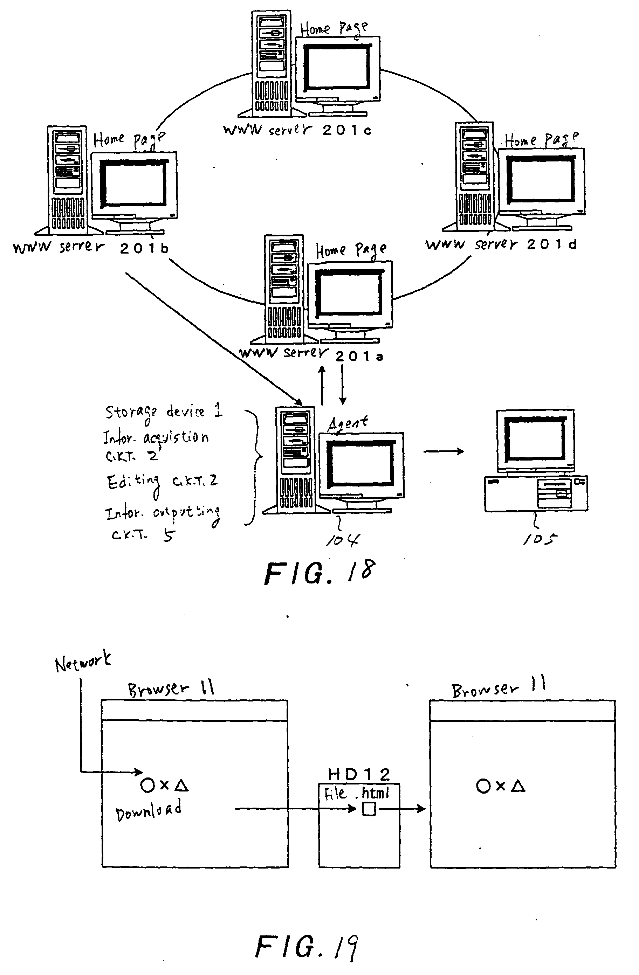

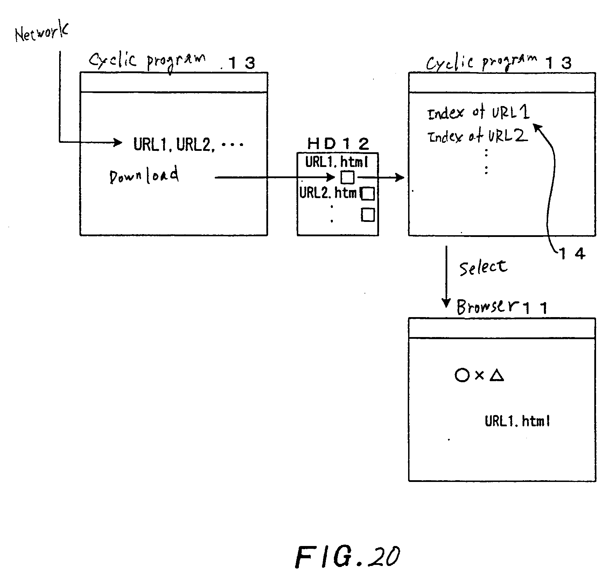

Usually, desired web information is, as shown in Fig. 19, displayed at a user terminal by a browser 11 and then downloaded to a hard disk 12. When the user wants to view the downloaded information again, it is displayed through the browser 11. Alternatively, all desired pieces of web information are, as shown in Fig. 20, downloaded through software called a cyclic program 13. Some of the desired pieces of web information are selected from a list of indexes 14 and displayed through the browser 11.

The above two systems are different only in that the former is a manual system and the latter is an automatic system. Specifically, both systems download the information via the internet as it is and display it. There is a system which, like the cyclic program 13, attach the indexes 14 to downloaded pieces of information and displays a portion of contents of the information. Such a system is sometimes used at a portal site.

The above systems, however, have the following drawbacks. When the user wants to view a plurality of associated pieces of information, it is necessary to access them independently, which results in an increase in amount of information to be downloaded. If the user does not know locations of the associated pieces of information, the user needs to find sources thereof by itself.

A system has been previously considered which specifies locations of desired associated pieces of information and collects and displays them together at an agent server. For example, when the information on a specified shop is derived, a system may be used which first designates two different information sources, one for the shop itself and the other for a map showing a route to the shop, and collects information on the shop and information on the map from the specified different information sources at an agent server, respectively. If an address of the shop is changed, but the designated information sources are kept unchanged, it is impossible to derive information on a new map of the shop. This is because the new map information is not linked to the old map information. It is impossible for a user to link them on the home page without permission.

It is therefore desirable to avoid the disadvantages of the above-mentioned systems.

According to an embodiment of one aspect of the present invention, there is provided an information presenting apparatus which comprises: (a) a storage device storing layout information presenting an information acquisition method and a presentation form; (b) an information acquisition circuit acquiring desired information from an information source specified according to the layout information and/or information sources detected by various searches according to the layout information; (c) an editing circuit laying out the acquired information according to the layout information; and (d) a presenting device presenting the laid out acquired information. The information acquisition circuit extracts key information from the acquired information and acquires another information using the key information.

The information acquisition method provided in the layout information preferably specifies a path and a means for reaching and acquiring desired information. For example, the information acquisition method can define, like an URL, a path and a means for accessing various information resources through a network and a name for specifying a resource or specifies an information acquiring source such as a database in which desired information would exist or a search key used for searching the information from the information acquiring source. The presentation form used herein is preferably a format for presenting the acquired information to a user through the presenting device and is looked up by the editing circuit to lay out the acquired information in a form suitable for visual perception of the user.

The storage device, the information acquisition circuit, the editing circuit, and the presenting device are preferably provided at a client side. The information acquisition circuit preferably acquires a portion or all of desired information through a server connected to the client.

The presenting device may be provided at a client side, and the storage device, the information acquisition circuit, and the editing circuit may be provided in a server connected to the client. In this case, the server is responsive to a request from a user on the client side to acquire the information through the information acquisition circuit and to lay out the information through the editing circuit and supplies the laid out acquired information to the client side for presenting it through the presenting device.

The storage device and the presenting device may be provided on a client side, while the information acquisition circuit and the editing circuit may be provided in a server connected to the client. The layout information stored in the storage device is supplied from the client side to the server in response to a request from a user on the client side to acquire the information through the information acquisition circuit and to lay out the information through the editing circuit. The server supplies the laid out acquired information to the client side for presenting it through the presenting device.

According to an embodiment of a second aspect of the present invention, there is provided an information presenting apparatus which comprises a server. The server includes (a) a storage device storing layout information presenting an information acquisition method and a presentation form, (b) an information acquisition circuit acquiring desired information from a specified information source and/or information sources detected by various searches according to the layout information, (c) an editing circuit laying out the acquired information according to the layout information, and (d) an information outputting circuit outputting the laid out acquired information to a client side for presenting it. The information acquisition circuit extracts key information from the acquired information and acquires another information using the key information.

The information acquisition circuit preferably performs the information acquisition method in the layout information to extract the key information from the acquired information to acquire another information based on the key information.

The layout information is preferably so provided as to be made or corrected by the user.

According to an embodiment of a third aspect of the present invention, there is provided an information presenting apparatus which comprises: (a) a first searching means for acquiring information derived by a search operation using a first search key; (b) a search key generating means for generating a second search key based on contents of the acquired information; (c) a second searching means for performing a search operation using the second search key to acquire information; and (d) a presenting means for presenting the information acquired by the search operations using the first and second search keys.

According to an embodiment of a fourth aspect of the present invention, there is provided a computer readable storage medium storing therein a program which operates a computer or at least one computer constituting a network which includes: (a) a storage device storing layout information presenting an information acquisition method and a presentation form; (b) an information acquisition circuit acquiring desired information from an information source specified according to the layout information and/or information sources detected by various searches according to the layout information, the information acquisition circuit extracting a search key from the acquired information to acquire another information using the search key; (c) an editing circuit laying out the acquired information according to the layout information; and (d) an presenting device presenting the laid out acquired information.

According to an embodiment of a fifth aspect of the present invention, there is provided a computer readable storage medium storing therein a program which operates a computer including: (a) a storage device storing layout information presenting an information acquisition method and a presentation form; (b) an information acquisition circuit acquiring a portion or all of desired information from an information source specified according to the layout information and/or information sources detected by various searches according to the layout information, the information acquisition circuit extracting a search key from the acquired information to acquire another information using the search key; (c) an editing circuit laying out the acquired information according to the layout information; and (d) a presenting device presenting the laid out acquired information.

According to an embodiment of a sixth aspect of the present invention, there is provided a computer readable storage medium storing therein a program which operates a computer including: (a) a storage device storing layout information presenting an information acquisition method and a presentation form; (b) an information acquisition circuit acquiring desired information from an information source specified according to the layout information and/or information sources detected by various searches according to the layout information, the information acquisition circuit extracting a search key from the acquired information to acquire another information using the search key; (c) an editing circuit laying out the acquired information according to the layout information; and (d) an information outputting circuit outputting the laid out acquired information to a second apparatus for presenting it at the second apparatus.

The information acquisition circuit preferably performs the information acquisition method in the layout information to extract the key information from the acquired information to acquire another information based on the key information.

The layout information is preferably so provided as to be made or corrected by the user.

According to an embodiment of a seventh aspect of the present invention, there is provided a computer readable storage medium storing therein a program which has a computer perform steps of: (a) acquiring information derived by a search operation using a first search key; (b) generating a second search key based on contents of the acquired information; (c) performing a search operation using the second search key to acquire information; and (d) presenting the information acquired by the search operations using the first and second search keys.

According to an embodiment of an eighth aspect of the present invention, there is provided an information presenting method comprising the steps of: (a) acquiring desired information from an information source specified according to layout information presenting an information acquisition method and a presentation form and/or information sources detected by various searches according to the layout information; (b) extracting key information from the acquired information to acquire another information based on the key information: (c) performing layout-editing operation on the acquired information according to the layout information; (d) presenting the laid out acquired information.

The acquiring step preferably performs the information acquisition method in the layout information to extract the key information from the acquired information to acquire another information based on the key information.

The layout information is preferably so provided as to be made or corrected by the user.

According to an embodiment of a ninth aspect of the present invention, there is provided an information presenting method which comprises: (a) acquiring information derived by a search operation using a first search key; (b) generating a second search key based on contents of the acquired information; (c) performing a search operation using the second search key to acquire information; and (d) presenting the information acquired by the search operations using the first and second search keys.

An embodiment of the present invention can provide an information presenting system which is designed to collect a plurality of pieces of information in the form of electric documents from different information sources via the internet according to specified layout information, edit them in layout, and display them as one piece of information and a computer-readable storage medium.

An embodiment of the present invention can also provide a system which is constructed by a program stored in the above computer-readable storage medium and which is capable of automatically obtaining associated pieces of information including non-associated pieces of information even when the non-associated pieces of information are altered or changed.

Reference will now be made, by way of example, to the accompanying drawings, in which:
Fig. 1 is an illustration which shows an information presenting apparatus according to an embodiment of the present invention;
Fig. 2 is a block diagram which shows a circuit structure of an information presenting apparatus of the first embodiment;
Fig. 3 is an explanatory view which shows an information acquisition method performed in an information acquisition apparatus of the first embodiment;
Fig. 4 is an explanatory view which shows one example of layout information and a displayed image of information acquired and laid out based on the layout information;
Fig. 5 is an explanatory view which shows one example of layout information in a case where an URL specifying connection information of a search engine is not fixed and a displayed image of information acquired and laid out based on the layout information;
Fig. 6 is an illustration which shows one example of a main menu displayed on a personal computer 101;
Fig. 7 is an explanatory view which shows a layered structure of a main menu displayed on a personal computer 101;
Fig. 8 is an explanatory view which shows an example of layout information on a shot selected from a restaurant guide;
Figs. 9, 10 and 11 are explanatory views which show processes of information acquiring operation and layout-editing operation;
Fig. 12 is an explanatory view which shows an image of acquired information displayed on a screen after being adjusted in size and location on the screen;
Fig. 13 is a flowchart of a program performed to produce an "image information. html" file;
Fig. 14 is a flowchart of a program to scale acquired map information up and down so that an image of the map information may fall within a specified displaying range on a screen;
Fig. 15 is an explanatory view which shows an example of layout information in a case where data on traffic access is deleted from the layout information;
Fig. 16 is an illustration which shows an image of information acquired using the layout information of Fig. 15;
Fig. 17 is an illustration which shows an information presenting apparatus according to a second embodiment of the invention;
Fig. 18 is an illustration which shows an information presenting apparatus according to a third embodiment of the invention;
Fig. 19 is an explanatory view which shows a previously-considered information acquisition method of downloading desired information through a browser; and
Fig. 20 is an explanatory view which shows a previously-considered information acquisition method of downloading desired information using cyclic programs.

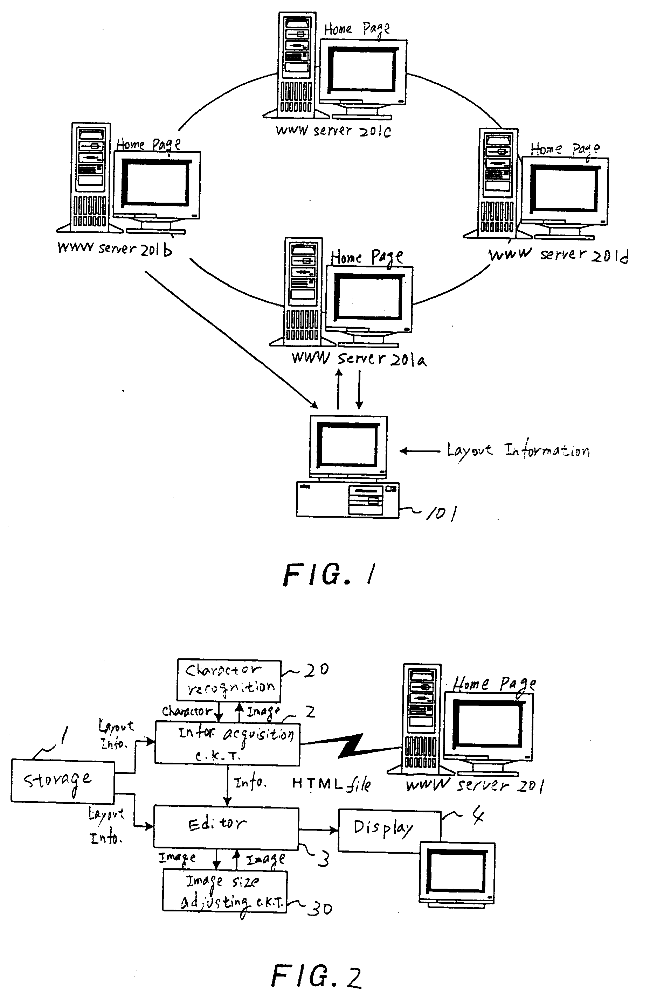

Referring now to the drawings, wherein like numbers refer to like parts in several views, particularly to Fig. 1, there is shown an information presenting apparatus according to the first embodiment of the invention which is realized by a personal computer 101 (or a work station) capable of accessing home pages on world wide web servers 201a, 201b, 201c, 201d, ··· through the internet.

The information presenting apparatus is actuated by loading thereinto and executing a given program stored in a CD-ROM and includes, as shown in Fig. 2, a storage device 1, an information acquisition circuit 2, an editing circuit 3, and a display 4. In this embodiment, the given program is loaded by the CD-ROM into the information presenting apparatus, however, it may alternatively be provided by any other storage devices or downloaded into the personal computer 101 from an external device through a network.

The storage device 1 is made of a hard disc or a RAM installed in the personal computer 101 and stores therein layout information, as will be described in detail later, presenting an information acquisition method and an information presentation form.

The information acquisition circuit 2 is made of a CPU (not shown) installed in the personal computer 101 or a communication device such as a terminal adapter connected to the personal computer 101 through an interface and works to acquire, as will be described later in detail, the part of or the whole of desired information from a designated information source and/or information sources detected through various searches according to the layout information. The information acquisition circuit 2 is provided with a character recognition circuit 20 designed to extract a text from an image. For example, the character recognition circuit 20, as will be described later, extracts the name of a station from map information.

The editing circuit 3 is made of the CPU in the personal computer 101 and designed to lay out the information acquired by the information acquisition circuit 2 according to the layout information. If an image of the acquired information does not agree in size with a displaying range defined by the information presentation form specified in the layout information, the editing circuit 3 scales up or down the image into agreement with the displaying range through an image size adjusting circuit 30.

The display 4 is implemented by a video output circuit (not shown) and a CRT of the personal computer 101 and designed to display the information laid out by the editing circuit 3.

The information acquisition method performed by the information acquisition circuit 2 and the layout information in which the information acquisition method is described will be discussed below.

Usually, magazines each have various articles printed thereon. On each page of the magazines, several pieces of information are laid out in a form meeting the needs of readers. The information presenting apparatus of this embodiment applies this concept to web information derived through the internet so that users can view a number of pieces of information laid out on each page as one group of associated pieces of information as reading a magazine.

For instance, when a collection of guides to restaurants is made using web information derived through the internet, the following several pieces of information are required:
(1) names and reviews of shops
(2) addresses
(3) telephone numbers
(4) maps
(5) traffic accesses to the shops
(6) introduction of chefs as needed in shops

All the above data are not always prepared on each web page. Most of web pages provide the data (1), (2), and (3), but do not have the data (4), (5), and (6).

Accordingly, the information acquisition circuit 2 is designed to store address data on information sources and acquires desired information using the address data. The address data has address information such as URLs, connection information on an information resource provided in the personal computer 101 itself (e.g., a data file stored in a CD-ROM loaded in a CD-ROM drive installed in the personal computer 101), and connection information on data bases accessible from the personal computer 101 through the internet. Instead of the URLs, search engine connection information may be used which specifies a search engine and inputs a search key thereto to obtain desired information.

The information acquisition method performed by the information acquisition circuit 2 will be discussed below taking the above restaurant guides as an example.

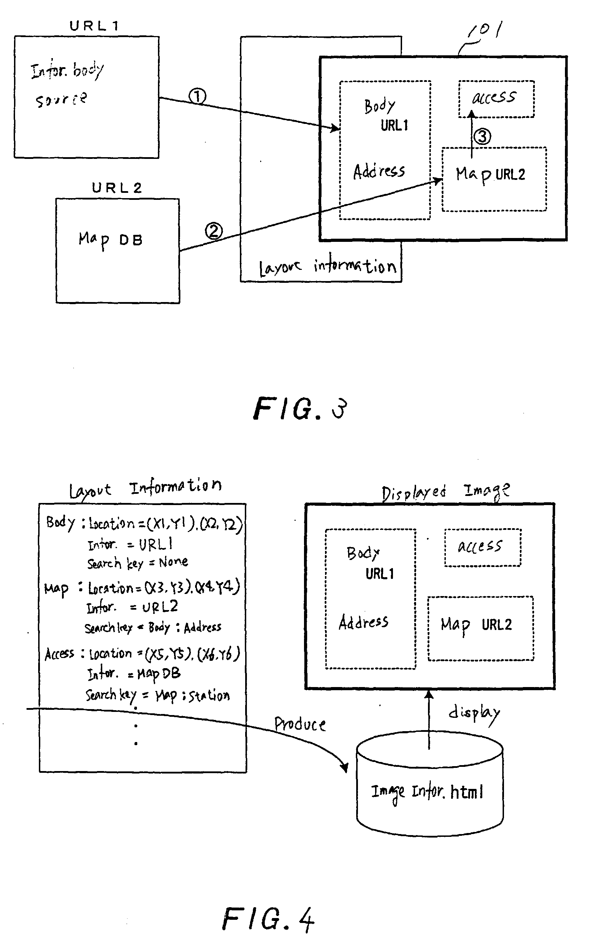

If the body of information ① first acquired, as shown in Fig. 3, contains data on an address, the information acquisition circuit 2 acquires map data ② from a map database through the internet (or a map database installed in the personal computer 101). If the map data contains names of stations, a name of the nearest station ③ is listed as access data. Specifically, a chain-information acquisition method is performed in which key information is extracted from the acquired information to search desired another information.

If the body of the first acquired information only contains a telephone number, the information acquisition circuit 2 may search a corresponding address from a telephone dictionary database which stores an associated list of telephone numbers, telephone subscribers, and addresses of the subscribers and obtain access data in the same manner as described above. The extraction of the name of station from the map data is achieved by extracting a text from an image as determining data near a symbol of a station on a map as character information through the character recognition circuit 20.

In order to have the information acquisition circuit 2 perform the above information acquisition method, the layout information to be looked up by the information acquisition circuit 2 contains the above address data on an information source as presenting the information acquisition method as well as the presentation form information on a page(s).

Fig. 4 shows an example of the layout information and information acquired by the information acquisition circuit 2, laid out by the editing circuit 3 using the layout information, and displayed by the display 4.

The layout information indexes a body describing (1) names and reviews of shops, (2) addresses, and (3) telephone numbers, (4) maps, and (5) traffic accesses which are required as restaurant guide information. Each index has a locational data 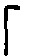 location =(X1, Y1), (X2, Y2), (X3, Y3), (X4, Y4), (X5, Y5), (X6, Y6) 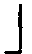 indicating a displayed location on a screen, an address data 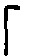 information = URL1, URL2, mapDB 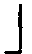 indicating an address of an information source, and a search data 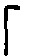 search key = address, map:station 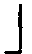 . Note that a URL as used as the address data on an information source is fixed.

The information acquisition circuit 2 performs the above described change-information acquisition method based on the information provided in each index and the search key. The editing circuit 3 performs a layout-editing operation on information acquired on an index-basis to place the information at a location on the screen determined by the address data and stores it as "image information. html". The display 4 indicates on a CRT associated pieces of information as one group based on the "image information. html". The editing circuit 3 may also store files other than the "image information. html".

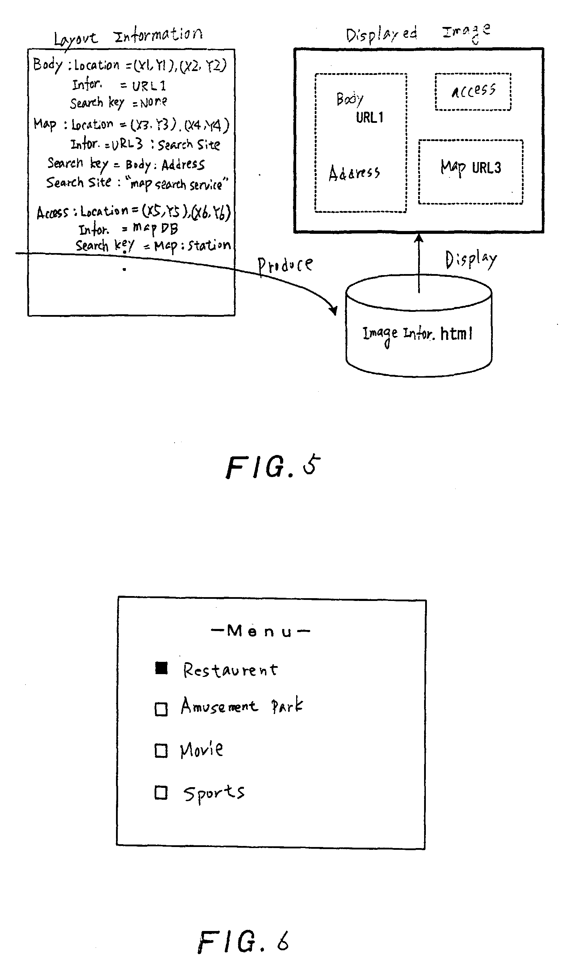

Fig. 5 shows another example of the layout information describing a search engine connecting data instead of the address data on a URL and an image produced based on the layout information, displayed on the display 4. In the example of Fig. 4, the URL is fixed, but it is possible to find desired information through the search engine using a search key. Instead of fixing the URL, this example specifies a search site as information indicating an address data on an information source.

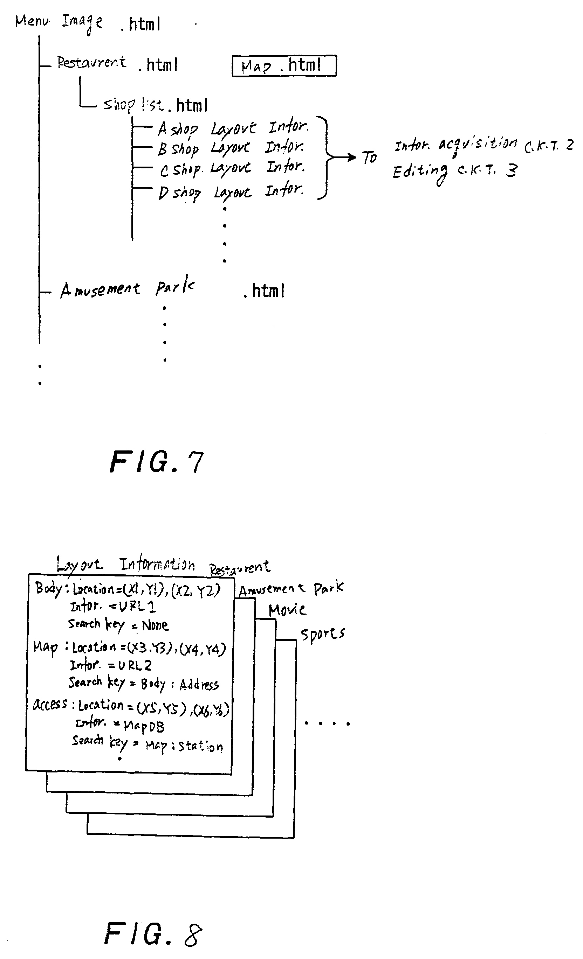

Fig. 6 shows an example of a main menu first indicated on the display 4 when a user operates the personal computer 101. The main menu is, as shown in Fig. 7, an uppermost one of layered menus. Below the main menu, "restaurant. html", "amusement park. html", "movie. html", and "sport. html" are layered.

Further, below the above layers, menus in another category are prepared. For example, when restaurants are selected in the main menu, some of them may also be selected from "restaurant. html" on a cooking category, a price range, a shop location, or their combination basis. One of shops in a "shop list. html" provided in a lower layer may be selected.

The "shop list. html" has layout information for each shop. The data contained in the layout information are all stored in the storage device 1.

When the user selects one of the shops in the above manner, the information acquisition circuit 2 acquires desired information based on the layout information. The editing circuit 3 performs the layout-editing operation on the acquired information to produce the "image information. html" The display 4 displays the "image information. html" and may be designed to print a displayed image as needed.

Steps of selecting desired information from the above described main menu will be discussed below.

Assume that the user selects an item of restaurant from the main menu, as shown in Fig. 6, for use of the restaurant guides. The user subsequently selects one or some of restaurants from the "shop list. html" in the "restaurant. html" according to a cooking category, a price range, or a shop location and obtains the layout information on each selected restaurant, as shown in Fig. 8, from the storage device 1.

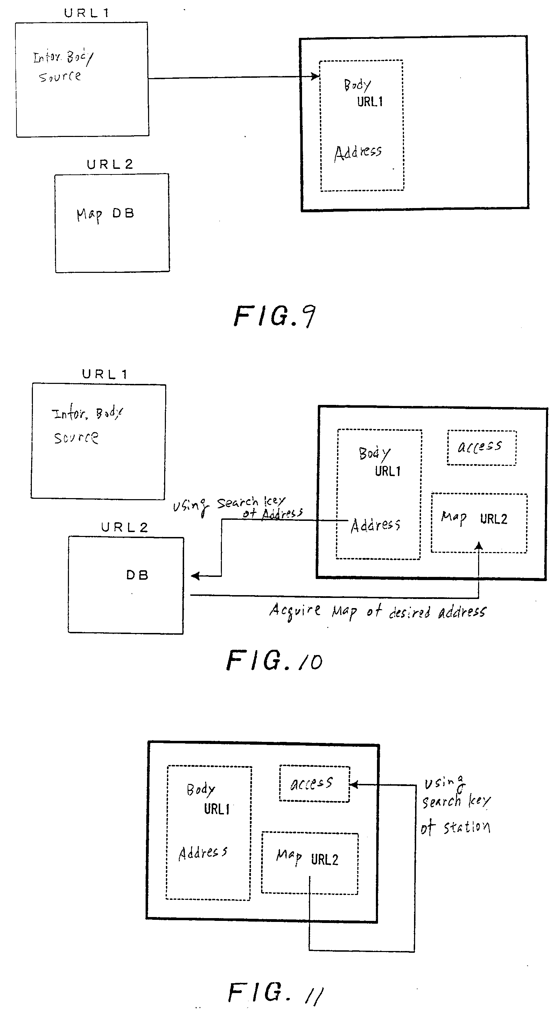

The information acquisition circuit 2 downloads, as shown in Fig. 9, contents associated with the body first provided in the layout information from a home page of the URL1. The editing circuit 3 performs the layout-editing operation on the downloaded contents so that they may be indicated at a location or on an area of the screen of the display 4 defined by locational data (X1, Y1) and (X2, Y2) as the body of information. In the following discussion, it is assumed that the body of information contains data on an address of the selected restaurant.

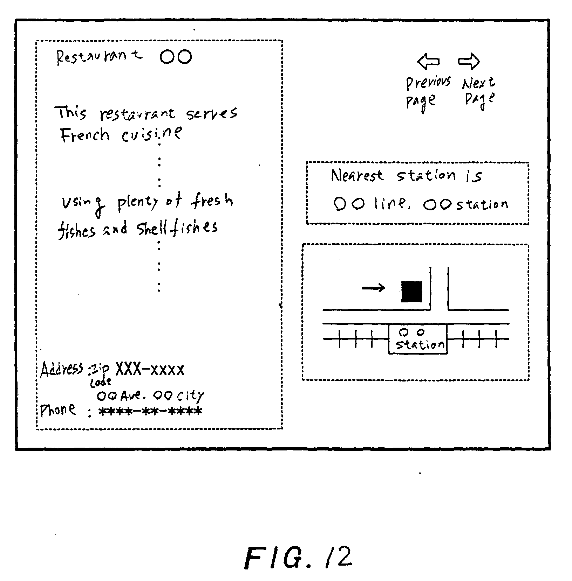

Next, the information acquisition circuit 2 uses, as shown in Fig. 10, the address contained in the body of the information as a search key to download a corresponding map from a map database of the URL2. The editing circuit 3 performs the layout-editing operation on the downloaded map so that it may be indicated at a location or on an area of the screen of the display 4 defined by locational data (X3, Y3) and (X4, Y4) as showing the location of the restaurant.

Further, in the layout information, a station is also defined as a search key. The character recognition circuit 20 of the information acquisition circuit 2 recognizes a symbol printed near the station of the search key on the map as character information to derive a mane of the station. The information acquisition circuit 2 uses, as shown in Fig. 11, the station search from the map as a search key to download traffic access information indicating the nearest station and railroads to the nearest station from the map database. The editing circuit 3 performs the layout-editing operation on the downloaded traffic access information so that it may be indicated at a location or on an area of the screen of the display 4 defined by locational data (X5, Y5) and (X6, Y6).

Fig. 12 shows the screen of the display 4 on which the data derived in the above manner, adjusted in size and arrangement by the editing circuit 3 are indicated. On the left side of the screen, a guide of the restaurant is described. On the right lower side, the map indicating the location of the restaurant is indicated. Above the map, the traffic access information is indicated. On the right upper side, two arrows are indicated: one is responsive to a click by a pointer to return the page to the previous one, and the other is also responsive to a click by the pointer to have the page go to the next one for retrieving the information on the above selected restaurants. All the data may not be displayed on the screen together. For instance, a map icon may be placed on the screen which provides map information in response to a click.

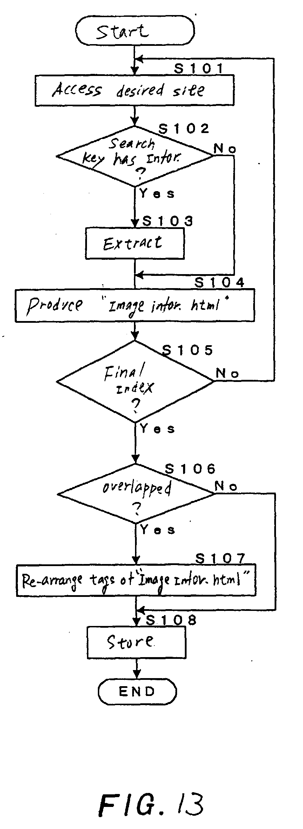

Fig. 13 is a flowchart of a program or sequence of logical steps performed by the information presenting apparatus to produce the "image information. html". This program may be stored in a computer readable storage medium.

The user choose some of shops in the manner, as described above, to determine candidates. The information acquisition circuit 2 searches the layout information on one of the candidates and access a web page specified by a URL provided in the layout information or a search site (step 101). Next, it is determined whether a search key has any information or not (step 102). If a NO answer is obtained meaning that the search key has no information, then the routine proceeds to step 104. Alternatively, if a YES answer is obtained, an extraction operation is performed using the search key to extract information related to contents indicated by a corresponding index in the layout information (step 103).

The editing circuit 3 merges the extracted information to produce "image information. html" (step 104). It is determined whether the extracted information corresponds to the final index in the layout information or not (step 105). If a NO answer is obtained, then the routine returns back to step 101. Alternatively, if a YES answer is obtained, the information-extracting operation terminates, and it is determined whether extracted pieces of information are overlapped in image on the screen or not (step 106).

If a NO answer is obtained meaning that there are no overlapped image on the screen, the layout-editing operation terminates, and the routine proceeds to step 108. Alternatively, if a YES answer is obtained, tags of the "image information. html" are re-edited (step 107). Subsequently, the "image information. html" is stored (step 108).

As described above, the layout information defines, as a parameter indicating the presentation form, the location of the information to be displayed on the screen. This location is defined over a rectangular area on the screen and given by coordinates of, for example, (X1, Y1) and (X2, Y2). Therefore, image information such as map information is automatically scaled up or down by the image size adjusting circuit 30 to produce new image file (GIF or JPG file) which is merged to produce the above described "image information. html".

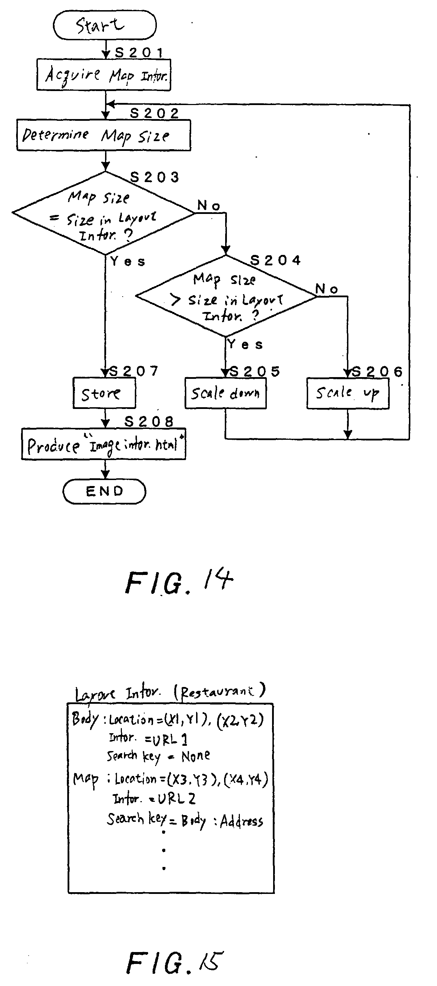

Fig. 14 is a flowchart of a program to scale the map information up and down so that an image of the map may fall within a specified displaying range on the screen of the display 4. This program may be stored in a computer readable storage medium.

First, the map information is acquired (step 201). The size of the map information is determined (step 202). It is determined whether the size of the map information agrees with a displayed area on the screen as defined by the locational data in the layout information or not (step 203).

If a YES answer is obtained meaning that the size of the map information agrees with the displayed area, the map information is stored as is (step 207). Alternatively, if a NO answer is obtained, then it is determined whether the size of the map information is greater than the displayed area or not (step 204).

If a YES answer is obtained meaning that the size of the map information is greater than the displayed area, the map information is scaled down (step 205). The routine then returns back to step 202. Alternatively, if a NO answer is obtained, the map information is scaled down (step 205), after which the routine returns back to step 202.

When the size of the map information agrees with the displayed area, the map information is stored (step 207) and merged to produce the "image information. html" (step 208).

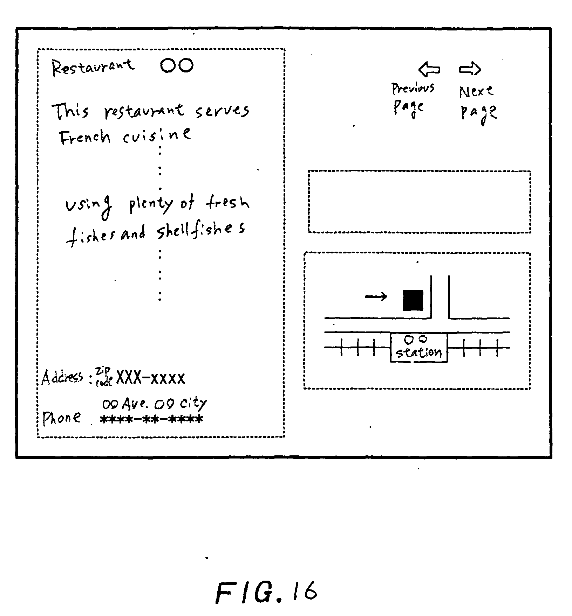

In the information presenting apparatus of this embodiment, use of an editing software such as an editor (or special software) allows the layout information stored in the storage device 1 to be customized. For example, if the user has concluded that information on the traffic access in the layout information, as shown in Fig. 8, is not needed, the user may delete, as shown in Fig. 15, contents of the traffic access from the layout information. In this case, images displayed on the display 4 will be ones, as shown in Fig. 16.

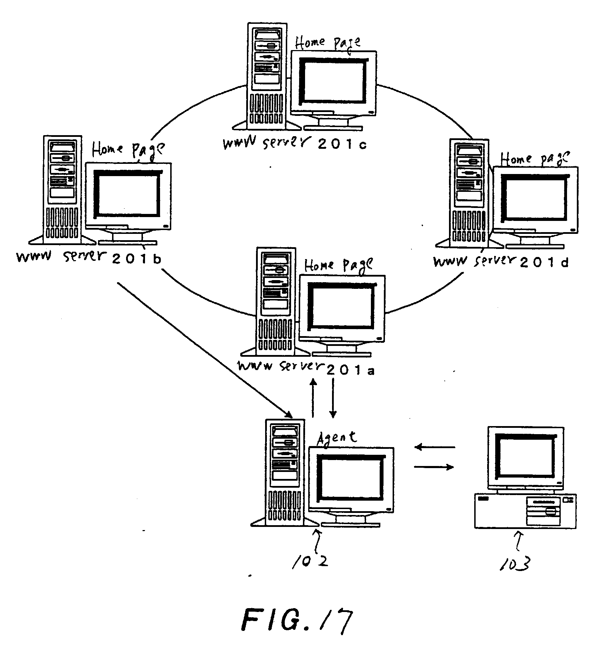

Fig. 17 shows an information presenting apparatus according to a second embodiment of the invention which is realized by an information combining server 102 and a personal computer 103 (or a work station) capable of accessing home pages on world wide web servers 201a, 201b, 201c, 201d, ··· through the internet.

The personal computer 103 has installed therein the storage device 1 and the display 4 which are the same as those in Fig. 2. The information acquisition circuit 2 and the editing circuit 3 which are the same as those in Fig. 2 are realized by agent software installed in the information combining server 102.

When the user operates the personal computer 103 to select one or some pieces of information from the main menu as described in the first embodiment, the storage device 1 of the personal computer 103 forwards the layout information corresponding each of the selected pieces of information to the agent software of the information combining server 102.

The agent software performs the functions of the information acquisition circuit 2 and the editing circuit 3, as described above. Specifically, the information combining server 102 uses data and search keys indicated by indexes in the layout information to perform the chain-information acquisition method, as described in the first embodiment. The information combining server 102 also performs the layout-editing operation to lay out the information acquired in an index basis using locational data in the layout information and produces the "image information. html".

The "image information. html" is outputted from the information combining server 102 to the personal computer 103. The personal computer 103 displays associated pieces of information on, for example, a CRT based on the "image information. html".

The above described structure is suitable for a case where the operation ability of the personal computer 103 is relatively low or the traffic of a network connecting the information combining server 102 and the personal computer 103 is low. Specifically, the information combining server 102 acquires information and performs the layout-editing operation and supplies only results of the operation to the personal computer 103, thereby resulting in a greatly improved efficiency of operation of the information presenting apparatus.

The layout information is stored in the storage device 1 installed in the personal computer 103, thereby allowing the layout information to be produced or corrected at a user' side. This enables information interest to the user to be acquired easily in an item or category basis (as specified by the presentation form in the layout information).

The storage device 1 may alternatively be installed in the information combining server 102. This structure is also suitable for a case where the operation ability of the personal computer 103 is relatively low or the traffic of a network connecting the information combining server 102 and the personal computer 103 is low. It, however, becomes impossible for the user to make or correct the layout information. Alternatively, it becomes possible for only authorized persons to make or correct the layout information stored in the server 102.

Fig. 18 shows an information presenting apparatus according to a third embodiment of the invention which is realized by an information combining server 104 capable of accessing home pages on world wide web servers 201a, 201b, 201c, 201d, ··· through the internet.

The information combining server 104 has installed therein the storage device 1 and the information outputting circuit 5 which outputs laid out information to the personal computer 105 for displaying it on a screen thereof. The information acquisition circuit 2 and the editing circuit 3 which are the same as those in Fig. 2 are realized by agent software installed in the information combining server 104.

When the user operates the personal computer 103 to select one or some pieces of information from the main menu as described in the first embodiment, the personal computer 1105 outputs a command to the agent software of the information combining server 104 to select the layout information corresponding to each of the selected pieces of information from the storage device 1.

The agent software performs the functions of the information acquisition circuit 2 and the editing circuit 3, as described above. Specifically, the information combining server 104 uses data and search keys indicated by indexes in the layout information to perform the chain-information acquisition method, as described in the first embodiment. The information combining server 104 also performs the layout-editing operation to lay out the information acquired in an index basis using locational data in the layout information and produces the "image information. html".

The "image information. html" is outputted from the information combining server 104 to the personal computer 105. The personal computer 105 displays associated pieces of information on, for example, a CRT based on the "image information. html".

The structure of this embodiment is suitable for a case where the operation ability of the information combining server 104 is greater than that of the personal computer 105 or the traffic of communication between the internet and the information combining server 104 is higher than that between the internet and the personal computer 105 because the information combining server 104 performs the information acquisition and the layout-editing operation in itself.

While the present invention has been disclosed in terms of the preferred embodiments in order to facilitate better understanding thereof, it should be appreciated that the invention can be embodied in various ways without departing from the principle of the invention. Therefore, the invention should be understood to include all possible embodiments and modifications to the shown embodiments which can be embodied without departing from the principle of the invention as set forth in the appended claims.

Although the above description has referred to a program stored on a computer-readable medium it will be appreciated that a computer program embodying the present invention need not be stored on a computer-readable medium and could, for example, be embodied in a signal such as a downloadable data signal provided from an Internet website. The appended claims are to be interpreted as covering a computer program by itself, or as a record on a carrier, or as a signal, or in any other form.

## Claims

1. An apparatus for presenting information comprising:
a storage device storing layout information presenting an information acquisition method and a presentation form;
an information acquisition circuit acquiring desired information from an information source specified according to the layout information and/or information sources detected by various searches according to the layout information;
an editing circuit laying out the acquired information according to the layout information; and
a presenting device presenting the laid out acquired information,
wherein said information acquisition circuit extracts key information from the acquired information and acquires another information using the key information.

2. An apparatus for presenting information as set forth in claim 1, wherein said storage device, said information acquisition circuit, said editing circuit, and said presenting device are provided at a client side, and wherein said information acquisition circuit acquires a portion or all of desired information through a server connected to the client.

3. An apparatus for presenting information as set forth in claim 1, wherein said presenting device is provided at a client side, and said storage device, said information acquisition circuit, and said editing circuit are provided in a server connected to the client, and wherein the server is responsive to a request from a user on the client side to acquire the information through said information acquisition circuit and to lay out the information through said editing circuit and supplies the laid out acquired information to the client side for presenting it through the presenting device.

4. An apparatus for presenting information as set forth in claim 1, wherein said storage device and said presenting device are provided on a client side, while said information acquisition circuit and said editing circuit are provided in a server connected to the client, and wherein the layout information stored in said storage device is supplied from the client side to the server in response to a request from a user on the client side to acquire the information through said information acquisition circuit and to lay out the information through said editing circuit, the server supplying the laid out acquired information to the client side for presenting it through the presenting device.

5. An apparatus for presenting information comprising:
a server including (a) a storage device storing layout information presenting an information acquisition method and a presentation form, (b) an information acquisition circuit acquiring desired information from a specified information source and/or information sources detected by various searches according to said layout information, (c) an editing circuit laying out the acquired information according to the layout information, and (d) an information outputting circuit outputting the laid out acquired information to a client side for presenting it,
wherein said information acquisition circuit extracts key information from the acquired information and acquires another information using the key information.

6. An apparatus for presenting information as set forth in any one of claims 1 to 5, wherein said information acquisition circuit performs the information acquisition method in the layout information to extract the key information from the acquired information to acquire another information based on the key information.

7. An apparatus for presenting information as set forth in any one of claims 1 to 5, wherein said layout information is so provided as to be made or corrected by the user.

8. An apparatus for presenting information comprising:
first searching means for acquiring information derived by a search operation using a first search key;
search key generating means for generating a second search key based on contents of said acquired information;
second searching means for performing a search operation using the second search key to acquire information; and
presenting means for presenting the information acquired by the search operations using the first and second search keys.

9. A computer readable storage medium storing therein a program which operates a computer or at least one computer constituting a network which includes:
a storage device storing layout information presenting an information acquisition method and a presentation form;
an information acquisition circuit acquiring desired information from an information source specified according to the layout information and/or information sources detected by various searches according to said layout information, said information acquisition circuit extracting a search key from the acquired information to acquire another information using the search key;
an editing circuit laying out the acquired information according to the layout information; and
a presenting device presenting the laid out acquired information.

10. A computer readable storage medium storing therein a program which operates a computer including:
a storage device storing layout information presenting an information acquisition method and a presentation form;
an information acquisition circuit acquiring a portion or all of desired information from an information source specified according to the layout information and/or information sources detected by various searches according to said layout information, said information acquisition circuit extracting a search key from the acquired information to acquire another information using the search key;
an editing circuit laying out the acquired information according to the layout information; and
a presenting device presenting the laid out acquired information.

11. A computer readable storage medium storing therein a program which operates a computer including:
a storage device storing layout information presenting an information acquisition method and a presentation form;
an information acquisition circuit acquiring desired information from an information source specified according to the layout information and/or information sources detected by various searches according to said layout information, said information acquisition circuit extracting a search key from the acquired information to acquire another information using the search key;
an editing circuit laying out the acquired information according to the layout information; and
an information outputting circuit outputting the laid out acquired information to a second apparatus for presenting it at the second apparatus.

12. A computer readable storage medium as set forth in any one of claims 9 to 11, wherein said information acquisition circuit performs the information acquisition method in the layout information to extract the key information from the acquired information to acquire another information based on the key information.

13. A computer readable storage medium as set forth in any one of claims 9 to 12, wherein said layout information is so provided as to be made or corrected by the user.

14. A computer readable storage medium storing therein a program which has a computer perform steps of:
acquiring information derived by a search operation using a first search key;
generating a second search key based on contents of said acquired information;
performing a search operation using the second search key to acquire information; and
presenting the information acquired by the search operations using the first and second search keys.

15. A method of presenting information comprising the steps of:
acquiring desired information from an information source specified according to layout information presenting an information acquisition method and a presentation form and/or information sources detected by various searches according to said layout information;
extracting key information from the acquired information to acquire another information based on the key information:
performing layout-editing operation on the acquired information according to the layout information;
presenting the laid out acquired information.

16. A method of presenting information as set forth in claim 15, wherein said acquiring step performs the information acquisition method in the layout information to extract the key information from the acquired information to acquire another information based on the key information.

17. A method of presenting information as set forth in claim 15 or 16, wherein said layout information is so provided as to be made or corrected by the user.

18. A method of presenting information comprising:
acquiring information derived by a search operation using a first search key;
generating a second search key based on contents of said acquired information;
performing a search operation using the second search key to acquire information; and
presenting the information acquired by the search operation using the first and second search keys.

19. A computer program which, when run on a computer, causes the computer to become an apparatus as claimed in any one of claims 1 to 8.

20. A computer program which, when run on a computer, causes the computer to carry out a method as claimed in any one of claims 15 to 18.
